# EUROPÄISCHE PATENTSCHRIFT

(11) **EP 0 826 945 B1**
(45) Veröffentlichungstag und Bekanntmachung des Hinweises auf die Patenterteilung: **09.10.2002**
(21) Anmeldenummer: 97114063.7
(22) Anmeldetag: 14.08.1997
(51) Int. Cl.: G01C 9/06, G01C 9/12

(54) **Neigungsmessvorrichtung zur Ermittlung einzelner Bauteilneigungen bei Kraftfahrzeugen**
Inclination gauge for determining the inclination of separate parts in motor vehicles
Clinomètre pour déterminer l'inclinaison de pièces de construction des véhicules automobiles

(30) Priorität: 27.08.1996 DE 19634506
(43) Veröffentlichungstag der Anmeldung: 04.03.1998
(73) Patentinhaber: DaimlerChrysler AG, 70567 Stuttgart (DE)
(72) Erfinder: Reichelt, Helmut, 73770 Denkendorf (DE); Schmidbauer, Rolf, 73207 Plochingen (DE); Schwegler, Karlheinz, 70327 Stuttgart (DE); Willenbrink, Ludger, 71686 Remseck (DE)

(56) Entgegenhaltungen:
- DE-A- 3 636 420
- DE-A- 3 707 345
- US-A- 4 716 534

## Beschreibung

Die Erfindung betrifft eine Neigungsmessvorrichtung zur Ermittlung einzelner Lenker-, Wellen und Aufbauneigungen bei Kraftfahrzeugen, die bei Anlage an das Messobjekt den Neigungswinkel eines Messobjekts gegenüber der Horizontalen oder Vertikalen mit Hilfe eines Sensors oder eines Sensorsystems elektronisch auswertbar erfasst.

Zur Sicherstellung der gewünschten Fahreigenschaften, des Geradeauslaufvermögens und um übermäßigen Reifenverschleiß zu verhindern, schreiben die Kraftfahrzeughersteller bestimmte Achseinstellwerte einschließlich der zulässigen Toleranzen für die Fahrzeugachsen ihrer Modelle vor. Beispielsweise lässt sich die Vorspur über die Spurstangen und/oder der Sturz- und Nachlaufwinkel über einen Exzenter einstellen. Bei den übrigen Achseinstellwerten für die Spreizung, den Lenkrollhalbmesser, den Nachlaufversatz und den Spurdifferenzwinkel handelt es sich um nicht einfach zu messende Konstruktionsdaten, die nur gebraucht werden, um ein unfallbeschädigtes oder schon länger eingesetztes Kraftfahrzeug auf seine Verkehrssicherheit überprüfen zu können.

Um die Achseinstellwerte bzw. die Achsgeometrie überprüfen oder vermessen zu können werden mechanische Niveaumessgeräte verwendet. Diese Messgeräte, die in der Regel jeweils nur für einen Kraftfahrzeugtyp bzw. für eine bestimmte Achse geeignet sind, bestehen jeweils aus einer Einhängevorrichtung mit einem vor einer Skala beweglichen Pendel. Pro Fahrzeugachse werden mindestens zwei verschiedene, an die jeweiligen radtragenden und radführenden Lenker angepasste Niveaumessgeräte benötigt. Zur Vermessung eines Lenkers wird das entsprechende Messgerät am Lenker des aufgebockten oder über einer Grube stehenden Fahrzeugs eingehängt. Mit Hilfe des ausschlagenden Pendels wird an der Skala der vorhandene Neigungswinkel abgelesen, bewertet und von Hand in ein Protokoll eingetragen.

Da neben den Produktionsstätten der Fahrzeughersteller die meisten Reparaturwerkstätten mit den verschiedenen Niveaumessgeräten ausgestattet sein müssen, entstehen den Herstellern für die Anschaffung, Wartung und Lagerhaltung dieser Messgeräte enorme Kosten.

Aus der DE 36 36 420 A1 ist ein Hochpräzisions-Winkelmessgerät bekannt, das ein frei schwingbares Pendel und eine durch einen Analog-Digital-Wandler erzeugte Digitalanzeige aufweist. Aufgrund einer besonderen Kalibriermöglichkeit können Winkel ausgehend von beliebigen Winkelneigungen ermittelt werden.

In der US 4,716,534 wird ein ebenfalls mit einem Pendelgewicht arbeitendes Winkelmessgerät beschrieben, wobei der ermittelte Winkel auf einem digitalen Display angezeigt und abgelesen werden kann.

Des weiteren ist aus der DE 37 07 345 A1 ein Verfahren zum Messen eines Winkels bekannt. Dabei wird eine Messfläche eines Winkelmessers an eine Ebene angelegt und ein Absolutwert eines Signals eines im Winkelmesser enthaltenen elektronischen Pendels ermittelt und ausgewertet.

Der Erfindung liegt das Problem zugrunde, eine universelle Niveaumessvorrichtung zu entwickeln, mit der u.a. die Achsgeometrie verschiedener Kraftfahrzeugtypen gemessen und/oder geprüft werden kann. Dabei soll die Neigungsmessung pro Messstelle in kürzerer Zeit, mit weniger Bedien- und Protokollieraufwand, sicherer bzw. zuverlässiger erfolgen können. Ferner sollen die Kosten für die Anschaffung, die Wartung und die Lagerhaltung verringert werden.

Das Problem wird mit den Merkmalen des Hauptanspruchs gelöst. Bei der neuen Neigungsmessvorrichtung ist zumindest der Sensor oder das Sensorsystem in einem Gehäuse angeordnet, das an seiner Außenkontur mindestens eine Adapterfläche und/oder Adapterkontur zur direkten oder indirekten Anlage am Messobjekt aufweist. Bei der indirekten Anlage wird mindestes ein Adapterelement zwischen der entsprechenden Adapterfläche und/oder Adapterkontur und dem Messobjekt angeordnet. Der ermittelte Neigungswinkel ist auf einer im Gehäuse des Sensors oder des Sensorsystems oder einer separat angeordneten Anzeigeeinheit darstellbar. Ebenfalls ist in der Anzeigevorrichtung eine Piktogrammfeld vorhanden, in dem der Betriebszustand der Messvorrichtung angezeigt werden kann. Die Neigungsmessvorrichtung weist mindestens eine Schnittstelle auf, die die Messsignale über Kabel oder Funk mindestens einer externen Auswerteeinrichtung zur Verfügung stellt.

Als Sensor oder Sensorsystem kann für die Neigungsmessvorrichtung jedes physikalische Prinzip angewandt werden, das als Beispiel einen Messbereich ca. +/- 15° hat und eine Messgenauigkeit von ca. 0,01 - 0,05° ermöglicht. Es können u.a. magnetoresistive, konduktometrische, piezoelektrische oder optische Sensoren sein. Auch eine Kombination verschiedener oder doppelt vorhandener Prinzipien kann in einem einzelnen Inklinometer eingebaut sein.

Zur einfacheren Handhabung können der Sensor und/oder das Sensorsystem mit seinen Adapterflächen und/oder Adapterkonturen separat von einer Anzeigeeinrichtung in einem eigenen Gehäuse untergebracht sein. Je nach Messprinzip können die Sensoren einschließlich ihrer Gehäuse wenige Kubikzentimeter groß sein, so dass die Anlageflächen bzw. Anlagekonturen an den Messobjekten nur wenige Quadratmillimeter groß sein müssen. Es ist denkbar, das Gehäuse des Sensors als Pyramidenstumpf, als Kegel, gestuften Bolzen oder dergleichen zu gestalten und am Kraftfahrzeug, beispielsweise an den Lenkern, den Antriebswellen oder an Karosserieschwellern in dort vorhandene, der Sensorgehäusegestalt entsprechenden Ausnehmungen für die Neigungsmessung zu stecken.

In diesem Fall werden für Neufahrzeuge keine Adapterelemente benötigt. Mit einem Sensor kann am Fahrzeug überall dort, wo eine messtechnisch nutzbare Ausnehmung eingearbeitet ist, die Neigung gemessen werden.

Die indirekte Anlage des Sensors über ein oder mehrere Adapterelemente ist im zuvor beschriebenen Fall nur bei Altfahrzeugen notwendig. Denn bei diesen Fahrzeugen fehlen die Ausnehmungen, in die der Sensor bzw. sein Gehäuse eingesteckt oder eingelegt werden kann. Diese Ausnehmungen werden in Adapterelemente eingearbeitet, die an den jeweiligen Lenkern oder den anderen Messobjekten anlegbar sind.

Bei größeren Sensoren oder Sensorsystemen wird man in der Regel nur mit Adapterelementen zur unterschiedlichen Anpassung des Sensorgehäuses an das Messobjekt auskommen.

Der vom Sensor ermittelte Neigungswinkel wird auf einer Anzeigeeinrichtung optisch oder akustisch dargestellt bzw. ausgegeben. Die Anzeigeeinrichtung ist am Sensorgehäuse oder in dessen Nähe angeordnet, so dass die die Neigungsmessvorrichtung bedienende Person vor Ort anhand des ausgegebenen Neigungswinkels die Plausibilität der Messung prüfen und die Messung gegebenenfalls wiederholen kann. Im Gehäuse der Anzeigeeinrichtung befinden sich auch die elektronischen Baugruppen zur Umwandlung der Messsignale in optisch und/oder akustisch darstellbare Messwerte.

Zusätzlich ist die Neigungsmessvorrichtung mit mindestens einer Schnittstelle ausgestattet, über die die Messwerte oder Messsignale mindestens einer externen Auswerteeinrichtung zur Verfügung gestellt werden können. Beispielsweise wird die Neigungsmessvorrichtung über eine serielle oder parallele Datenleitung mit einem PC verbunden. Mit Hilfe des PCs wird beispielsweise aus den verschiedenen Neigungswinkeln der radtragenden bzw. radführenden Lenker bestimmte Achsgeometriewerte errechnet und mit entsprechenden Achseinstellwerten verglichen. Das Ergebnis wird automatisch protokolliert und ausgedruckt.

In einem anderen Fall wird beispielsweise nach dem Einbau einer Klimaanlage die Karosserieneigung gemessen und im PC mit der regulären Niveaulage ohne Klimaanlage verglichen. Im PC werden mit Hilfe der Neigungswerte und der fahrzeugtypspezifischen Fahrwerksdaten die Beträge ermittelt, um die die einzelnen Fahrzeugfedern unterlegt werden müssen, um die Karosserie wieder in die reguläre Niveaulage zu bringen.

Bei diesen und vergleichbaren Neigungsmessungen hat der Bediener nur noch das richtige Auswerteprogramm auszuwählen und den Sensor sachgemäß am Kraftfahrzeug anzulegen. Auf diese Weise sind Ablese-, Übertragungs- und Protokollierfehler ausgeschlossen und Fehlinterpretationen weitgehend ausgeschaltet. Außerdem kann die Neigungsmessung von nur einer Person vorgenommen werden.

Weitere Merkmale der Erfindung ergeben sich aus den abhängigen Ansprüchen und der nachfolgenden Beschreibung einer schematisch dargestellten Ausführungsform:
- Figur 1:: Neigungsmessvorrichtung ohne Auswerteeinheit in der Seitenansicht mit Teilschnitt;
- Figur 2:: Neigungsmessvorrichtung in der Frontansicht.

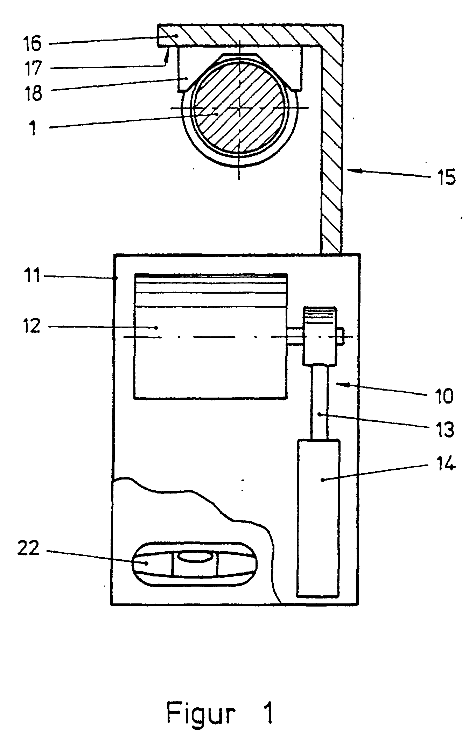

Figur 1 zeigt einen prinzipiellen Aufbau des am Messobjekt (1) anzuordnenden Sensors (10). Der in einem Gehäuse (11) untergebrachte Sensor (10) besteht aus einem Winkelmeßsystem (12) mit inkrementaler Messwerterfassung. Auf der Welle des Winkelmeßsystems (12) ist ein Pendelgewicht (14) über eine Pendelstange (13) befestigt. Aus dem oberen Bereich des Gehäuses (11) ragt ein T-förmiger Tragarm (15) hervor. Der Querbalken (16) des Tragarms (15) weist an seiner unteren Seite eine Adapterfläche (17) auf. An letzterer sind hier zwei prismatische Adapter (18) und (19) befestigt. Mit Hilfe der Adapter (18, 19) wird der Sensor (10) am Messobjekt (1), z.B. einer Antriebswelle, eingehängt.

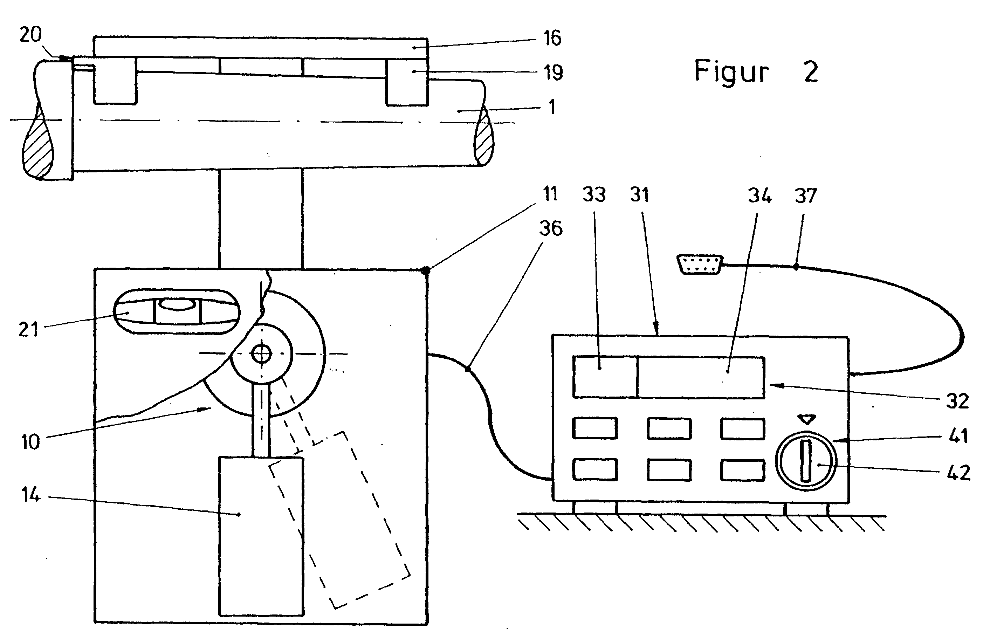

Der linke Adapter (18) dient mit seiner speziell gestalteten linken Stirnfläche (20), vgl. Figur 2, zusätzlich als Anschlag, um eine definierte Messposition auf der hier nicht zylindrischen Antriebswelle (1) zu haben.

Beim Ausführungsbeispiel sind im Gehäuse (11) zwei Wasserwaagen (21) und (22) integriert. Die in Figur 2 gezeigte Wasserwaage (21) ist beispielsweise parallel zum Querbalken (16) des Tragarmes (15) ausgerichtet. Die andere, in Figur 1 dargestellte Wasserwaage (22) ist im Gehäuse (11) parallel zur Welle des Winkelmeßsystems (12) orientiert. Mit ihrer Hilfe wird das Gehäuse (11) vertikal ausgerichtet, damit die Schwenkebene des Pendels (13, 14) in einer Vertikalebene liegt. Folglich ist die Welle des Winkelmeßsystems (12) bezüglich der Schwenkachse zumindest annähernd momentenfrei, was eine minimale Lagerreibung ermöglicht. Eine geringe Lagerreibung ist eine Voraussetzung für eine brauchbare Wiederholgenauigkeit der Neigungsmessvorrichtung.

In Figur 2 ist rechts neben dem Sensor (10) eine Auswerteeinheit (31) dargestellt, die über ein Messkabel (36) mit dem Sensor (10) bzw. dem Winkelmeßsystem (12) verbunden ist. Die Auswerteeinheit (31) enthält u.a. die Elektronik zur Umwandlung der Sensorsignale in Winkelmesswerte, zur Ansteuerung einer Anzeigeeinrichtung (32) und zur Aufbereitung für die digitale Messwertweitergabe.

Für die Messwertweitergabe ist an der Auswerteeinheit (31) ein Datentransferkabel (37) zur Kommunikation mit einem externen Rechner angeschlossen. Selbstverständlich kann an der Stelle des Kabels (37) auch eine entsprechende Buchse am Gehäuse der Auswerteeinheit (31) angebracht sein.

Die Anzeigeeinrichtung (32) ist ein LCD-Display mit einem Piktogrammfeld (33) und einem Ziffernfeld (34). Im Ziffernfeld (34) wird die Neigung in Grad und Minuten oder in Dezimalgrad angegeben. Im Piktogrammfeld (33) wird der Betriebszustand angezeigt.

Im Rahmen der Betriebszustandsanzeige können einzelne Betriebsarten wie z.B. Messvorgang, Momentanwertspeicherung, Löschanzeige, Nullpunktabgleich und Datentransfer angegeben werden. Eine Messwertüberschreitung oder eine Falschanlage, z.B. eine Überkopfanordnung des Sensors können ebenfalls durch ein Piktogramm angezeigt werden. Alternativ oder zusätzlich kann die Auswerteeinheit (31) in diesen Fällen einen Warnton abgeben und/oder eines oder beide Anzeigefelder (33, 34) blinken lassen.

Unter der Anzeigeeinrichtung (32) befinden sich einige Bedienelemente (41), beispielsweise in Form von Tastern und Drehknöpfen. Über die Taster werden Betriebsarten gewählt, während über einen Drehknopf (42) ein Nullpunktabgleich vorgenommen werden kann. Für den Nullpunktabgleich kann hilfsweise die Wasserwaage (22) benutzt werden. Der Drehknopf (42) ist gegen unabsichtliches Verstellen berührgeschützt.

### Bezugszeichenliste:

- 1: Messobjekt, Antriebswelle

- 10: Sensor
- 11: Sensorgehäuse, Gehäuse
- 12: Winkelmeßsystem, Drehwinkelgeber
- 13: Pendelstange
- 14: Pendelgewicht
- 15: Tragarm
- 16: Querbalken
- 17: Adapterfläche
- 18, 19: Adapterelemente
- 20: Stirnfläche
- 21: Wasserwaage
- 22: Wasserwaage

- 31: Auswerteeinheit
- 32: Display, Anzeigeeinrichtung
- 33: Piktogrammfeld, Symbolfeld, Anzeigefeld
- 34: Ziffernfeld, Anzeigefeld

- 36: Messkabel
- 37: Datentransferkabel, RS-232-Kabel mit Stecker

- 41: Bedienelemente
- 42: Drehknopf, Stellglied

## Patentansprüche

1. Neigungsmessvorrichtung zur Ermittlung einzelner Lenker-, Wellen- und Aufbauneigungen bei Kraftfahrzeugen, die bei Anlage an das Messobjekt den Neigungswinkel eines Messobjekts gegenüber der Horizontalen oder Vertikalen mit Hilfe eines Sensors oder eines Sensorsystems elektronisch auswertbar erfasst,
- wobei zumindest der Sensor (10) oder das Sensorsystem in einem Gehäuse (11) angeordnet ist, das an seiner Außenkontur mindestens eine Adapterfläche (17) und/oder Adapterkontur zur direkten oder indirekten Anlage am Messobjekt (1) aufweist, und bei der indirekten Anlage mindestens ein Adapterelement (18, 19) zwischen einer Adapterfläche (17) und/oder Adapterkontur und dem Messobjekt (1) anordbar ist,
- wobei der ermittelte Neigungswinkel auf einer im Gehäuse des Sensors oder des Sensorsystems oder einer separat angeordneten Anzeigeeinrichtung (32) optisch darstellbar und/oder akustisch ertönbar ist,
- mit einer Schnittstelle zur Weitergabe der Messsignale oder Messwerte über Kabel (37) oder Funk an eine externe Auswerteeinrichtung,
**dadurch gekennzeichnet,**
**dass** zur Anzeige des Betriebszustandes in der Anzeigeeinrichtung (32) ein Piktogrammfeld (33) vorhanden ist.

2. Neigungsmessvorrichtung gemäß Anspruch 1, **dadurch gekennzeichnet, dass** sie eine Einrichtung zur Plausibilitätskontrolle einzelner Messungen aufweist, die so ausgestattet ist, dass eine Bewertung der Messung über die Anzeigeeinrichtung erfolgt.

3. Neigungsmessvorrichtung gemäß Anspruch 1, **dadurch gekennzeichnet, dass** sie einen Messbereich von +/-15° hat.

4. Neigungsmessvorrichtung gemäß Anspruch 1, **dadurch gekennzeichnet, dass** die Messgenauigkeit mindestens ein Hundertstel eines Winkelgrades beträgt.

5. Neigungsmessvorrichtung gemäß Anspruch 1, **dadurch gekennzeichnet, dass** am Gehäuse (11) des Sensors (10) oder Sensorsystems mindestens eine Wasserwaage (21, 22) oder Libelle angeordnet ist.

6. Neigungsmessvorrichtung gemäß Anspruch 1, **dadurch gekennzeichnet, dass** sie eine Einrichtung für einen Nullpunktabgleich aufweist, wobei die Einrichtung über ein Stellglied manuell bedienbar ist.

7. Neigungsmessvorrichtung gemäß Anspruch 1, **dadurch gekennzeichnet, dass** sie eine eigene Stromversorgung hat.

## Claims

1. An inclinometer for determining the individual inclinations of suspension links, shafts and bodywork elements in motor vehicles which, when placed on the measurement object, records the angle of inclination of a measurement object in relation to the horizontal or the vertical using a sensor or a sensor system in such a manner that it can be electronically evaluated,
- the sensor (10) or the sensor system at least being positioned in a housing (11), the outer contour of which has at least one adapter surface (17) and/or adapter contour to be placed directly or indirectly on the measurement object and, in the case of indirect contact, it being possible to place at least one adapter element (18, 19) between an adapter surface (17) and/or adapter contour and the measurement object (1),
- it being possible to represent the angle of inclination measured either optically or acoustically on a display device (32) located either in the housing of the sensor or sensor system or separately,
- with an interface to forward the test signals or test values to an external evaluation device by cable (37) or radio,
**characterised in that**
the display device (32) features a pictogram field (33) to display the operating status.

2. An inclinometer in accordance with claim 1,
**characterised in that**
it has a device for plausibility testing individual measurements which is designed in such a manner that the measurement is evaluated by the display device (32).

3. An inclinometer in accordance with claim I,
**characterised in that**
it has a measuring range of +/- 15°.

4. An inclinometer in accordance with claim 1,
**characterised in that**
the measurement accuracy is at least one hundredth of a degree.

5. An inclinometer in accordance with claim I,
**characterised in that**
at least one spirit level (21, 22) or bubble level is positioned on the housing (11) of the sensor (10) or sensor system.

6. An inclinometer in accordance with claim 1,
**characterised in that**
it has a device for carrying out zero point alignment, it being possible to operate this device manually via an actuating device.

7. An inclinometer in accordance with claim 1,
**characterised in that**
it has its own electrical power supply.

## Revendications

1. Dispositif clinomètre pour déterminer des inclinaisons individuelles des bras, des arbres et de la superstructure dans des véhicules automobiles, qui, lors de l'application contre l'objet à mesurer, détecte l'angle d'inclinaison d'un objet à mesurer par rapport à l'horizontale ou à la verticale à l'aide d'un palpeur ou d'un système palpeur, de façon évaluable par voie électronique, dans lequel :
- au moins le palpeur (10) ou le système palpeur est agencé dans un boîtier (11) qui présente sur son contour extérieur au moins une surface d'adaptateur (17) et/ou un contour d'adaptateur pour l'application directe ou indirecte sur l'objet à mesurer (1) et lors de l'application indirecte au moins un élément adaptateur (18, 19) peut être agencé entre une surface d'adaptateur (17) et/ou un contour d'adaptateur et l'objet à mesurer (1),
- l'angle d'inclinaison déterminé peut être représenté par voie optique sur une unité d'affichage (32) agencée dans le boîtier du palpeur ou du système palpeur ou bien agencée séparément, et/ou il peut être signalisé par voie acoustique,
- une interface pour transmettre les signaux de mesure ou les valeurs de mesure à au moins un dispositif d'évaluation externe via des câbles (37) ou par radiocommunication,
**caractérisé en ce que** :
pour afficher l'état de fonctionnement, un champ à pictogrammes (33) est prévu dans le dispositif d'affichage (32).

2. Dispositif clinomètre selon la revendication 1, **caractérisé en ce qu'**il comprend un organe pour le contrôle de plausibilité de mesures individuelles, qui est ainsi réalisé qu'un jugement de la mesure s'effectue via le dispositif d'affichage (32).

3. Dispositif clinomètre selon la revendication 1, **caractérisé en ce qu'**il présente une plage de mesure de +/- 15°.

4. Dispositif clinomètre selon la revendication 1, **caractérisé en ce que** la précision de mesure est d'au moins un centième de degré d'angle.

5. Dispositif clinomètre selon la revendication 1, **caractérisé en ce qu'**au moins un niveau à eau ou un niveau à bulle d'air est agencé sur le boîtier (11) du palpeur (10) ou du système palpeur.

6. Dispositif clinomètre selon la revendication 1, **caractérisé en ce qu'**il comprend un élément pour une compensation de zéro, l'élément pouvant être manipulé manuellement via un organe de positionnement.

7. Dispositif clinomètre selon la revendication 1, **caractérisé en ce qu'**il comprend une propre alimentation en courant électrique.
